(19) Europäisches Patentamt
European Patent Office
Office européen des brevets

(11) **EP 2 841 188 B1**

(12) **EUROPÄISCHE PATENTSCHRIFT**

(45) Veröffentlichungstag und Bekanntmachung des Hinweises auf die Patenterteilung:
**13.11.2019 Patentblatt 2019/46**

(51) Int Cl.:
*B01D 65/00* (2006.01)        *B01D 67/00* (2006.01)
*B01D 69/02* (2006.01)        *B01D 65/02* (2006.01)
*B29K 105/00* (2006.01)        *B01D 29/11* (2006.01)
*B01D 29/13* (2006.01)        *B29L 31/14* (2006.01)
*B29K 81/00* (2006.01)        *B29K 105/04* (2006.01)
*B29C 65/02* (2006.01)

(21) Anmeldenummer: **13710306.5**

(22) Anmeldetag: **16.03.2013**

(86) Internationale Anmeldenummer:
**PCT/EP2013/000811**

(87) Internationale Veröffentlichungsnummer:
**WO 2013/159855 (31.10.2013 Gazette 2013/44)**

(54) **FILTERELEMENT MIT VERBESSERTER PRÜFBARKEIT NACH TROCKENEM BEDAMPFEN**

FILTER ELEMENT WITH IMPROVED TESTABILITY AFTER DRY STEAMING

ÉLÉMENT FILTRANT PRÉSENTANT UNE APTITUDE À L'ESSAI AMÉLIORÉE APRÈS UN TRAITEMENT À LA VAPEUR D'EAU SÈCHE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **27.04.2012 DE 102012008471**

(43) Veröffentlichungstag der Anmeldung:
**04.03.2015 Patentblatt 2015/10**

(60) Teilanmeldung:
**19155286.8 / 3 517 200**

(73) Patentinhaber: **Sartorius Stedim Biotech GmbH 37079 Göttingen (DE)**

(72) Erfinder:
• HANSMANN, Björn
  37077 Göttingen (DE)
• THOM, Volkmar
  37083 Göttingen (DE)
• LOEWE, Thomas
  37077 Göttingen (DE)

(74) Vertreter: **Stehl, Astrid Sartorius Stedim Biotech GmbH Intellectual Property Management August-Spindler-Straße 11 37079 Göttingen (DE)**

(56) Entgegenhaltungen:
WO-A1-2005/115595        US-A- 5 376 274
US-A- 6 159 369        US-A1- 2011 244 215

**Beschreibung**

Die vorliegende Erfindung betrifft ein schmelzgefügtes Filterelement, beispielsweise in der Form einer Filterkerze, mit verbesserter Prüfbarkeit nach trockenem Bedampfen oder alternativ nach Sterilisierung durch Bestrahlung, ein Verfahren zur Herstellung des erfindungsgemäßen Filterelements, sowie die Verwendung des Filterelements zur Filtration von Lösungen.

Filterelemente, z.B. für den Einsatz in der pharmazeutischen Produktion, sind in der Regel in Kunststoffgehäuse oder Kunststoffeinsätze eingefasste Membranen, welche von flüssigen zu filtrierenden Medien durchströmt werden (siehe beispielsweise EP 0 096 306 A2). Eine typische Bauform sind flache Kunststoffhalterungen, mit welchen flache Polymermembranen durch "thermisches Fügen", also durch Schmelzen der polymeren Materialien und Fügen der Schmelzzonen, unlösbar verbunden werden. Die erreichbare Membranfläche ist für diese Bauform jedoch klein und in der Regel nur für den Labor- oder kleineren Prozessmaßstab geeignet.

Für die Verwendung in großen Prozessmaßstäben haben sich weitere Bauformen in Form von in Bahnen plissierten, d.h. gefalteten, Membranen etabliert, welche an beiden Enden der Membranbahn zu einem zylindrischen Ring miteinander verbunden werden. Dieser zylindrische Ring der plissierten Membran ist an beiden Stirnflächen offen. Einerseits müssen sowohl die beiden Enden der Membranbahn miteinander verbunden werden, als auch die beiden resultierenden Stirnflächen der plissierten Membranbahn abgedichtet bzw. mit einem Gehäuse verbunden werden. Generell werden dazu direkt die Membranen und/oder die Gehäusematerialien durch Erwärmen im gewünschten Fügebereich ein- oder beidseitig in Polymerschmelze überführt. Diese Polymerschmelze ist mindestens zähflüssig, wodurch beide Seiten der zu fügenden Verbindung unter Anwendung von Druck gefügt werden können. Nach dem Erkalten der Polymerschmelze entsteht dann eine stabile Verbindung (siehe beispielsweise US 3,457,339).

In besonderen Fällen ist es nicht möglich, beide Seiten einer zu fügenden Verbindung in den Schmelzezustand zu überführen. Insbesondere kann dies für Membranen gelten, wenn deren Struktur und Form im Schmelzezustand so verändert wird, dass eine gewünschte Funktion nach dem Fügeprozess nicht mehr gegeben ist. In diesen Fällen kann einseitig das Gehäusebauteil im Fügebereich in Polymerschmelze überführt werden. Beim Fügen wird in diesem Fall die kalte Membran in die heiße Polymerschmelze des Gehäusebauteils eingebracht. Eine solche Fügung ist ebenfalls ausreichend stabil, wenn die Fügung konstruktiv richtig angelegt wird und eine ausreichende Menge Polymerschmelze am Gehäusebauteil erzeugt wird.

Unabhängig von der Bauform erfahren Membranen, welche über einen Schmelzfügeprozess mit dem Filterelement verbunden werden, im Bereich der Schmelzfuge eine thermische Belastung. Diese thermische Belastung ist abhängig von konstruktiven Faktoren, insbesondere aber vom Schmelzpunkt des Kunststoffes, mit welchem die Membran gefügt werden soll. Es zeigt sich, dass per se hydrophile oder hydrophilisierte Membranen durch diese thermische Belastung beim Fügen geschädigt werden können, was eine Veränderung der Membraneigenschaften zur Folge hat, welche unter Umständen zu einer Verschlechterung der Benetzbarkeit im Bereich der Fügung und damit der Prüfbarkeit der Filterelemente führt. Dies ist insbesondere der Fall, wenn das Filterelement weiteren thermischen Belastungen ausgesetzt ist, wie z.B. durch Bedampfung oder, noch ausgeprägter, durch trockene Bedampfung.

Filterelemente im Sinne dieser Erfindung haben die Aufgabe, Stofftrennung aufgrund von Größenausschluss zu erzielen. Hierzu zählt auch die Abreicherung von Hefezellen oder Bakterien (Sterilfiltration), Viren (Virusabreicherung), Proteinaggregaten oder anderen partikulären Verunreinigungen. Filterelemente erfüllen diese Aufgabe durch den Einsatz von Membranen, durch welche die Lösung aufgrund eines Druckgefälles geführt wird.

In den genannten Prozessen werden Filterelemente in der Regel vor und/oder nach der Filtration auf ihre Integrität geprüft. Mit Hilfe eines Integritätstests wird mit einem geeigneten Messverfahren gemessen, ob die geforderte Porengröße der Membran nicht überschritten wird und weiterhin keine mechanischen Defekte in der Membran, ihrer Abdichtung zum Filtergehäuse oder im gasdicht ausgeführten Filtergehäuse vorliegen. Der bestandene Integritätstest zeigt dann die Funktionstüchtigkeit des Filterelements. Die gängige Methode für den Integritätstest ist der Bubblepoint-Test und/oder der Gasdiffusionstest für mit Wasser benetzte Filterelemente (DIN 58356-2:08/2000, DIN 58355-2). Für ein positives Testergebnis muss gewährleistet sein, dass die Membran in ihrer gesamten Fläche und Dicke mit Wasser benetzt ist. Unbenetzte Flächen der Membran führen zu konvektiven Luftströmen, welche einen erniedrigten Blasenpunkt bzw. eine erhöhte Gasdiffusion zur Folge haben. Dies hat zur Folge, dass ein Integritätstest in diesem Fall nicht bestanden wird, obwohl das Filterelement, wenn es vollständig bzw. ausreichend benetzt gewesen wäre, den Integritätstest bestanden hätte und die erwartete Stofftrennung aufweisen würde, sofern die Membran sowie deren Einbindung in das Filterelement ansonsten fehlerfrei sind, d.h. keine Poren/Fehlstellen aufweist, die die erwünschte Stofftrennung durch Größenausschluss nicht erfüllen.

Eine weitere Anforderung an Filterelemente, welche für die oben genannten Prozesse eingesetzt werden, ist deren Sterilisierbarkeit mittels Dampf. Hierfür werden die Filterelemente gewöhnlich für einen Zeitraum von 15 bis 90 Minuten bedampft, d.h. mit Wasserdampf bei Temperaturen von bis zu 140°C durchströmt, oder autoklaviert, d.h. das Filterelement wird Wasserdampf mit Temperaturen bis zu 140°C in einem separaten Schritt vor Einsatz ausgesetzt, um eine vollständige Sterilisation der Einheit vor deren Gebrauch zu gewährleisten. Diese Bedampfung der Filterelemente stellt eine hohe thermische Belastung für die Filterelemente dar. Je höher die gewählte Dampftemperatur, umso höheren Belastungen ist das Filterelement durch diesen Schritt ausgesetzt. Gleichzeitig sterilisiert die Bedampfung das Filterelement umso wirkungsvoller, je höher die Bedampfungstemperatur gewählt wird. Die Anwender dieser Filterelemente haben also ein Interesse daran, die Filterelemente mit einer möglichst hohen Dampftemperatur zu bedampfen, um eine möglichst weitreichende Sterilisierung in möglichst geringer Zeit zu erreichen. So werden zum Beispiel in Wallhäusser, K. H., "Praxis der Sterilisation, Desinfektion, Konservierung, Keimidentifizierung, Betriebshygiene", Georg Thieme Verlag, Stuttgart 1984, repräsentativ Bedampfen und Autoklavieren bei 134°C bis 140°C für 30 Minuten beschrieben.

Ein weitere Anforderung ist es, dass diese Bedampfung der Filterelemente zur Sterilisation ohne vorherige Benetzung/Spülung der Filterelemente durchgeführt werden kann, die Filterelemente also "trocken bedampft" werden können und anschließend, nach minimaler Spülung, eine Integritätsprüfung durchgeführt werden kann. Durch die Möglichkeit zur trockenen Bedampfung wird ein vorhergehender Spülschritt des Filterelementes unnötig. Da der für den Spülschritt nötige Aufwand an Zeit und Material eingespart werden kann, ist es von Interesse, Filterelemente bereitzustellen, die trocken bedampft werden können.

Geht der Sterilisation durch Bedampfen ein Spülschritt voraus, wird dieser Gesamtprozess auch als "nasses Bedampfen" bezeichnet. In den Filterelementen enthaltene Membranen sind mit Wasser benetzt. Dabei hat sich gezeigt, dass trockenes Bedampfen eine höhere thermische Belastung für das Filterelement darstellt als das nasse Bedampfen. Es wird vermutet, dass aufgrund der Verdampfungskühlung und der Wärmekapazität durch das im Benetzungsschritt eingebrachte Wasser das "nasse Bedampfen" ein thermisch weniger belastender Schritt für die Filterelemente ist als die alternative "trockene Bedampfung".

Eine weitere Anforderung ist es, dass das Filterelement sich durch die trockene Bedampfung nicht in seinen Eigenschaften und seiner Prüfbarkeit verändert. Nach Sterilisation der Filterelemente mittels Dampf werden diese gespült, um sie für den Integritätstest vorzubereiten. Um Zeit und Benetzungsflüssigkeit einzusparen, ist es wünschenswert, dass die für einen erfolgreichen Integritätstest notwendige vollständige Benetzung des Filterelementes mit einer minimalen Menge an Benetzungsflüssigkeit (< 1 Liter Wasser / m$^2$), mit einem minimalen Differenzdruck (< 0,1 bar) und in einer minimalen Zeit (< 120 Sekunden) möglich ist.

Die Prüfbarkeit von schmelz(e)gefügten Filterelementen nach trockener Bedampfung ist bei vielen aus dem Stand der Technik bekannten Filterelementen nur mit erheblichem Spülaufwand gewährleistet.

Aus dem Stand der Technik bekannte Filterelemente, welche nach trockener Bedampfung mit einem minimalen Spülaufwand erfolgreich auf Integrität geprüft werden können, weisen eine oder mehrere der folgenden Charakteristika auf:

(1) Verfärbungen (Oxidation) der Membran durch das trockene Bedampfen.
(2) Die Membranen selbst sind im Fügebereich so modifiziert, dass sie gasundurchlässig werden, zum Beispiel durch Schmelzen, Füllen oder Komprimieren der Membran.
(3) Im Fügebereich sind Hilfsmaterialien, wie z.B. Kunststofffolienstreifen, eingebracht, um die Membran gasundurchlässig zu machen und die Verbindung zwischen Filterelement und Membran bei gleichzeitiger Minimierung der thermischen Belastung der Membran im Bereich der Schmelzfuge zu verbessern.
(4) Im Fügebereich wird die Membranoberfläche derart modifiziert, dass sie nach dem Schmelzfügeprozess ausreichende Benetzbarkeit mit Wasser aufweist.

Damit haben alle derartigen im Stand der Technik beschriebenen Filterelemente den Nachteil, dass die Membran sich beim trockenen Bedampfen verfärbt (oxidiert wird) und/oder der Fügebereich in einem zusätzlichen Prozessschritt bei der Herstellung modifiziert werden muss.

So beschreiben EP 0 096 306 A2, US 4,392,958, US 4,512,892 und US 4,906,371 Prozesse zur Aufbringung von Kunststofffolienstreifen, um die poröse Membran im Fügebereich/Randbereich gasundurchlässig zu machen. DE 38 033 41 A1 beschreibt die Verfilmung der Randbereiche poröser Membranen durch Einwirkung von Lösemittel, Lösemitteldampf oder Temperatur, wodurch die derartig behandelten Membranen an den verfilmten Bereichen gasundurchlässig werden. US 5,846,421 beschreibt poröse Membranen, die im Schmelzfugenbereich durch hochmolekulare Verbindungen ausgefüllt werden, um Gasundurchlässigkeit zu erreichen. Allen diesen Verfahren ist gemein, dass die Membran im Fügebereich durch einen zusätzlichen Prozessschritt modifiziert wird, um Gasundurchlässigkeit zu gewährleisten, um einen späteren Integritätstest sicher zu bestehen, selbst wenn die Membran im Randbereich - durch den Fügeprozess induziert - veränderte Materialeigenschaften (beispielsweise veränderte Benetzbarkeit) aufweist.

Die folgenden Dokumente beschreiben Verfahren zur Modifizierung der Membranoberfläche im Fügebereich, wobei im Gegensatz zu den vorstehend aufgeführten Verfahren diese Verfahren dadurch gekennzeichnet sind, dass die Membran im Fügebereich durchlässig bleibt: EP 0 571 871 B1 offenbart Poly(ether)sulfon-Membranen mit einer vernetzten Polyvinylpyrrolidon-(PVP)-Beschichtung: Vor oder nach dem Trocknen der Poly(ether)sulfon-Basismembran wird diese durch ein Imprägnierbad geleitet, welches PVP, Vinylpyrrolidon-Monomere und weitere hydrophobe Monomere enthält. Als Radikalinitiator für die PVP-Vernetzung wird ein anorganisches Peroxosulfat verwendet. Die Membranen sind nach dem Trocknen vollständig und spontan mit Wasser benetzbar und überstehen beispielsweise eine 1,5 bis 2,5 Stunden dauernde Behandlung mit Wasserdampf bei 134°C und 2 bar, ohne diese Spontanbenetzbarkeit mit Wasser zu verlieren. Diese Spontanbenetzbarkeit ist zwingend an das Vorhandensein von hydrophoben Monomeren im Imprägnierbad bei der Herstellung geknüpft. Es wird jedoch nicht offenbart, dass eine trocken bedampfte Filterkerze, die eine wie in EP 0 571 871 B1 beschriebene Membran enthält, nach minimaler Benetzung prüfbar ist. Es wird lediglich die Membran selber dem Dampf ausgesetzt. Des Weiteren ist lediglich bekannt, dass aus dem Stand der Technik bekannte Membranen, welche keine vorhergehende thermische Belastung durch Schmelzfügung erfahren haben, weiterhin hydrophil bleiben können.

WO 2004/009201 A2 offenbart in Wasser auf Integrität testbare Filterkerzen mit Membranen auf Polyethersulfonbasis, deren Einbettungsbereiche in die Polypropylenendkappen mit einer hydrophilen Beschichtung versehen sind, welche die Porosität der Membran nicht kompromittiert. Die hydrophile Beschichtung besteht aus Polyethylenimin, Polyvinylalkohol, BUDGE (1,4-Butandioldiglycidylether) oder Polyepichlorhydrin-Harzen mit Amingruppen. Derartige Kerzen werden erfolgreich auf Integrität geprüft ("Forward-Flow"- oder "Reverse-Bubblepoint"-Test). Es wird jedoch nicht offenbart, dass eine trocken bedampfte Filterkerze, die eine wie in WO 2004/009201 A2 beschriebene Membran enthält, nach minimaler Benetzung prüfbar ist. Gemäß WO 2004/009201 A2 werden Kerzen vor der Luftdiffusionsmessung nicht trocken bedampft, sondern lediglich gespült und getestet. Die starke thermische Belastung, welche durch ein trockenes Bedampfen ausgeübt wird, fehlt bei diesen Versuchen. Des Weiteren stellt die selektive Imprägnierung der Randbereiche der Membran einen zusätzlichen Prozessschritt dar, welcher aufwendig ist.

DE 43 39 810 C1 beschreibt ein Verfahren zur partiellen Modifizierung von porösen Membranen im Fügebereich. Membranen aus Poly(ether)sulfon, die mit Polyvinylpyrrolidon modifiziert sind, werden in den Randbereichen mit einem Gemisch aus Polyvinylpyrrolidon (PVP) und aus einem Copolymer aus Polyvinylpyrrolidon (PVP) und Vinylacetat (VA) so modifiziert, dass in diesen Randbereichen eine erhöhte Konzentration an vernetztem PVP bzw. PVP-VA-Copolymer vorliegt. Die selektive Imprägnierung der Randbereiche der Membran führt bei den daraus herstellbaren Filterkerzen dazu, dass die Filterkerzen mittels Luftdiffusionsmessung (Druckhaltetest oder Integritätstest) jeweils auf ihre Integrität prüfbar sind. Es ist jedoch unwahrscheinlich, dass eine trocken bedampfte Kerze, die eine wie in DE 43 39 810 C1 beschriebene Membran enthält, nach minimaler Benetzung prüfbar wäre, insbesondere, da die Beschichtung im Randbereich auch aus einem thermisch instabilen PVP-VA-Copolymer besteht. Weiterhin geht aus DE 43 39 810 C1 nicht hervor, welche Eigenschaften die Membran im beschichteten Randbereich aufweist, insbesondere in Bezug auf die Permeabilität der Membran. Die beschriebenen Benetzungszeiten von 10 bis 30 Minuten und die beschriebenen Benetzungsvolumina erfüllen bei weitem nicht die Anforderungen einer Benetzungsdauer von unter 120 Sekunde und eines Benetzungsfluidvolumens von unter 1 L/m$^2$ Membranfläche, wie sie für Filtrationsverfahren mit Einwegfilterelementen gefordert werden. Darüber hinaus werden zusätzliche unvorteilhafte Imprägnier-, Spül- und Trocknungsschritte beschrieben, welche unerwünscht sind.

Zusammengefasst haben daher alle bekannten Verfahren gemeinsam, dass ein zusätzlicher Arbeitsschritt nötig ist, um die Membran im Fügebereich zusätzlich zu modifizieren. Trockene Bedampfbarkeit ist jedoch nicht offenbart.

WO 2005/115595 A1 offenbart ein Filterelement, welches ein Filtergehäuse, zwei Endkappen und eine hydrophile Filtrationsmembran umfasst. Die in die Endkappen eingebetteten Randbereiche der hydrophilen Filtrationsmembran sind entweder hydrophob oder weisen zusätzliche Randfilme auf, die die thermische Stabilität der Randbereiche der Membran beim Einbetten in die Endkappen erhöhen.

US 6,159,369 offenbart ein Filterelement mit einer hydrophilen Filtrationsmembran, deren Randbereiche, die in hydrophobe Verankerungselemente, wie Endkappen, eingebettet sind, gegenüber der übrigen Membranfläche eine mindestens zweimal höhere Hydrophilie aufweisen. Diese in den Randbereichen erhöhte Hydrophilie wird durch ein Verfahren erreicht, bei welchen die hydrophilen Randbereiche in eine Lösung eingetaucht werden, deren hydrophile Bestandteile nachfolgend durch Trocknen und Erhitzen in den Randbereichen fixiert wird, wodurch die hydrophile Membran in den Randbereichen zusätzlich modifiziert wird.

US 2011/0244215 A1 offenbart mikroporöse Membranen, auf deren äußerer und innerer Oberfläche durch Einwirkung von Elektronenstrahlen ein vernetztes hydrophiles Polymer fixiert ist.

US 5,376,274 offenbart hydrophile Membranen auf Polysulfon-Basis, die durch Polyvinylpyrrolidon und ein Copolymer aus Vinylpyrrolidon und hydrophoben Monomeren spontan mit Wasser benetzbar sind.

Eine alternative Sterilisierungsmethode zur vorstehend genannten trockenen Bedampfung von Filterelementen ist die Sterilisierung durch Bestrahlung, wobei die Filterelemente hochenergetischer Strahlung, wie Beta-, Gamma- oder Elektronenstrahlung ausgesetzt werden, wodurch kontaminierende Mikroorganismen abgetötet werden. Vorzugsweise wird dieses Verfahren für Einwegfiltrationssysteme eingesetzt, in welchen Filterelemente innerhalb von Einweggehäusen mit weiteren Einwegkomponenten, wie Schläuchen, komplett einsatzbereit als geschlossenes System vorassembliert sind, welches vor seiner Verwendung durch Bestrahlung sterilisiert wird und nach erfolgter Sterilisierung bis zu seinem Einsatz lagerfähig ist. Aufgrund der Abgeschlossenheit dieses Systems, seiner i. a. geringen Größe sowie der Unzulässigkeit, beim Einsatz des Systems offen mit Fluiden zu hantieren, muss mit geringsten Mengen an Fluiden eine Prüfbarkeit der Filterelemente erreicht werden.

Der vorliegenden Erfindung liegt somit die Aufgabe zugrunde, ein einfach herstellbares Filterelement bereitzustellen, welches nach trockenem Bedampfen oder alternativ nach Sterilisierung durch Bestrahlung und folgender Minimalbenetzung, d.h. nach einem zeitlich begrenzten, mit begrenztem Spülvolumen und begrenztem Spüldruck durchgeführten Spülschritt, erfolgreich auf seine Integrität getestet werden kann, und welches sich durch trockene Bedampfung oder alternativ durch Sterilisierung durch Bestrahlung nicht in seinen Materialeigenschaften verändert.

Diese Aufgabe wird durch die in den Ansprüchen gekennzeichneten Ausführungsformen der vorliegenden Erfindung gelöst.

Insbesondere wird erfindungsgemäß ein schmelzgefügtes Filterelement mit verbesserter Prüfbarkeit nach trockenem Bedampfen oder alternativ nach Sterilisierung durch Bestrahlung bereitgestellt, umfassend ein Gehäuse, das einen Kunststoff oder ein Kunststoffgemisch umfasst, und eine poröse, beständig gegenüber mechanischer, thermischer und chemischer Einwirkung hydrophil modifizierte Polymermembran, deren Oberflächenspannung bei 20 °C größer als 72 mN/m ist, wobei die Hydrophilisierung der Polymermembran durch chemisches oder physikalisches Modifizieren einer unmodifizierten Polymermembran mit einem Hydrophilisierungsagens bewerkstelligt ist, wobei die Polymermembran durch einen Schmelzfügeprozess über Schmelzfugen mit dem Gehäuse verbunden ist, die Polymermembran im Fügebereich abgesehen von der Hydrophilisierung mit dem Hydrophilisierungsagens nicht physikalisch oder chemisch oder durch im Fügebereich eingebrachte Hilfsmaterialien zusätzlich modifiziert ist, wobei der Schmelzpunkt des Kunststoffs oder des Kunststoffgemisches des Gehäusebauteils, welches mit der Polymermembran schmelzgefügt ist, um mindestens 125°C niedriger als die Degradationstemperatur des Hydrophilisierungsagens ist, mit welchem die Polymermembran beständig gegenüber mechanischer, thermischer und chemischer Einwirkung hydrophilisiert ist, und wobei das Hydrophilisierungsagens Poly-2-ethyloxazolin ist.

Der Begriff "Filterelement" umfasst erfindungsgemäß alle Filtrationsvorrichtungen, welche die Aufgabe haben, Stofftrennung aufgrund von Größenausschluss oder unterschiedlicher Affinität zu erzielen. So eignet sich beispielsweise das erfindungsgemäße Filterelement zur Abreicherung von Hefezellen oder Bakterien (Sterilfiltration), Viren (Virusabreicherung), Proteinaggregaten oder anderen partikulären Verunreinigungen. Gemäß einer bevorzugten Ausführungsform der vorliegenden Erfindung handelt es sich bei dem Filterelement um eine Filterkerze. Unter "Bestrahlung" im Sinne der vorliegenden Erfindung wird Beta-, Gamma- oder Elektronenstrahlung verstanden.

Unter dem Begriff "verbesserte Prüfbarkeit nach trockenem Bedampfen" wird erfindungsgemäß verstanden, dass das erfindungsgemäße Filterelement nach trockener Bedampfung mit einem minimalen Spülaufwand (Minimalbenetzung) erfolgreich auf Integrität geprüft werden kann, ohne dass eine Degradation der Polymermembran im Filterelement durch das trockene Bedampfen auftritt. Unter "Degradation" wird erfindungsgemäß jede thermisch induzierte oxidative Materialveränderung, insbesondere Verfärbungen, verstanden. Unter dem Begriff "erfolgreich auf Integrität prüfen" wird erfindungsgemäß verstanden, dass ein Integritätstest, bestehend aus einem Blasendruck- (Bubblepoint-) und/oder Diffusionstest, ein positives Ergebnis liefert. Dies ist dann der Fall, wenn die Membran sowie deren Einbindung in das Filterelement fehlerfrei sind, d.h. keine Poren/Fehlstellen aufweist, die die erwünschte Stofftrennung durch Größenausschluss/Affinität nicht erfüllen, und das gesamte Filterelement vollständig benetzt ist.

Unter dem Begriff "Minimalbenetzung" wird erfindungsgemäß verstanden, dass ein Filterelement oder eine Membran innerhalb eines Gehäuses mit entsprechenden Leitungsanschlüssen mit einer minimalen Menge an Benetzungsflüssigkeit und minimalem Benetzungsdruck vollständig benetzt werden kann. Dazu kann beispielsweise eine peristaltische Pumpe (Schlauchpumpe), wie sie bei Pharmaprozessen mit Einwegfilterelementen typischerweise eingesetzt wird, mit max. 0,1 bar Druck vor dem Filterelement verwendet werden. Die Benetzungsdauer ist dabei maximal 120 Sekunden, und die Menge an Wasser maximal 1 Liter/m$^2$ nominelle Filterfläche. Unter nomineller Filterfläche wird die Filterfläche eines Filterelements verstanden, welche effektiv angeströmt wird. Darüber hinaus können mehrere Lagen Filtermembran hintereinander im Filterelement angeordnet sein, wobei dann jedoch nur die erste angeströmte Lage zählt.

Unter dem Begriff "vollständige Benetzung" wird erfindungsgemäß verstanden, dass die gesamte Grenzfläche, welche die Unfiltratseite des Filterelements von der Filtratseite des Filterelements trennt, entweder für Flüssigkeit undurchlässig ist oder aber mit Prüfflüssigkeit gefüllt ist. Zu der für Flüssigkeit undurchlässigen Grenzfläche zählen zum Beispiel die aus massivem Kunststoff gefertigten Endkappen des Filterelements. Die mit Prüfflüssigkeit gefüllten Bereiche der Grenzfläche umfassen vorwiegend sämtliche Poren der eingebetteten Membranstruktur, aber auch etwaige Zwischenräume, die beim Fügen der Membran in das Filterelement verblieben sein könnten. Wenn vollständige Benetzung vorliegt, wird ein Bubblepoint-Test und/oder Diffusionstest nicht durch verbleibendes Gas in der Grenzfläche, welche die Unfiltratseite des Filterelements von der Filtratseite des Filterelements trennt, fälschlicherweise negativ beeinflusst. Das bedeutet, dass nach intensiverem Benetzen, z. B. durch vorgelagerte Schritte wie Temperatureinsatz (z.B. Autoklavieren) oder Benetzen mit Flüssigkeiten mit niedrigerer Oberflächenspannung (beispielsweise Alkohol) und nach einem anschließenden Integritätstest keine höheren Bubblepointdrücke oder ein niedrigerer Diffusionsfluss gemessen werden.

Unter einem Integritätstest versteht man beispielsweise, dass die Integrität des Filterelements über die Bestimmung des Blasenpunkts bzw. der Höhe der Gasdiffusion (Druckhaltetest) bei einem vorgegebenen Testdruck (DIN 58356-2:08/2000, DIN 58355-2) unterhalb des Blasenpunkts getestet wird. Der Bubblepoint ist dabei der Blasenpunkt bzw. die Gasdiffusion bei einem vorgegebenen Druck (DIN 58356-2:08/2000, DIN 58355-2). Ein Integritätstest, bestehend aus Blasendruck- (Bubblepoint-) und Diffusionstest, kann beispielsweise wie unter den Beispielen beschrieben durchgeführt werden.

Unter dem Begriff "poröse Polymermembran" wird erfindungsgemäß eine poröse Struktur verstanden, die eine mittlere Porengröße ("Mean-Flow"-Porengröße) im Bereich von 0,001 bis 10 $\mu$m, bevorzugt von 0,01 bis 5 $\mu$m, am meisten bevorzugt von 0,1 bis 1 $\mu$m aufweist. Dabei ist die "Mean-Flow"-Porengröße diejenige Porengröße einer Membran, unterhalb derer 50% des Gasflusses durch Poren < "Mean-Flow"-Porengröße auftritt. Die "Mean-Flow"-Porengröße kann beispielsweise nach ASTM F316 03 (2011) ("Standard Test Methods for Pore Size Characteristics of Membrane Filters by Bubble Point and Mean Flow Pore Test") gemessen werden.

Das Material der Polymermembran im erfindungsgemäßen Filterelement unterliegt keiner Einschränkung. Gemäß einer bevorzugten Ausführungsform umfasst die Polymermembran mindestens einen Kunststoff, ausgewählt aus der Gruppe, bestehend aus Polysulfon, Polyethersulfon, Celluloseacetat, Cellulosenitrat, Polyvinylidenfluorid, Polypropylen, Polyethylen, Polytetrafluorethylen, Polyamid und Copolymeren von diesen, sowie Gemischen davon. Entsprechende Membranen sind im Stand der Technik bekannt. Gemäß einer besonders bevorzugten Ausführungsform umfasst die Membran Polyethersulfon.

Die Dicke der Polymermembran im erfindungsgemäßen Filterelement unterliegt keiner Einschränkung. Gemäß einer bevorzugten Ausführungsform liegt die Dicke der Polymermembran im Bereich von 5 bis 500 $\mu$m, mehr bevorzugt im Bereich von 50 bis 300 $\mu$m und am meisten bevorzugt im Bereich von 80 bis 200 $\mu$m.

Die Polymermembran im erfindungsgemäßen Filterelement ist eine beständig gegenüber mechanischer, thermischer und chemischer Einwirkung hydrophil modifizierte Polymermembran. Unter "hydrophil" im Sinne der vorliegenden Erfindungen sollen Polymermembranen verstanden werden, deren Oberflächenspannung bei 20°C größer als 72 mN/m ist, beziehungsweise deren Kontaktwinkel gegenüber Wasser kleiner als 10° ist. Der im Rahmen der vorliegenden Erfindung definierte Kontaktwinkel ist der statische Kontaktwinkel in Grad [°] gegenüber Reinstwasser. Der Kontaktwinkel $\theta$ kann analog ASTM-D5946-09 mit einem handelsüblichen Goniometer durch Aufbringen eines Tropfen Reinstwassers (1 bis 2 $\mu$L) auf die zu analysierende Oberfläche und anschließende Auswertung gemäß Gleichung 1 ermittelt werden, wobei $\theta$ den Kontaktwinkel, B die halbe Breite des Tropfens und H die Höhe des Tropfens bezeichnet. Die Auswertung kann dabei mit Hilfe einer Software (zum Beispiel PG Software der Firma FIBRO system AB) erfolgen.

$$\theta = 2 \arctan (H/B) \quad \text{(Gleichung 1)}$$

Für die praktischen Anwendungen von Polymermembranen ist es üblicherweise wünschenswert, wenn die Membran mechanisch stabil, thermisch und chemisch beständig und in gängigen (organischen) Lösemitteln unlöslich ist. Vor diesem Hintergrund kommen als Membranmaterialien häufig Polymere zum Einsatz, deren Oberflächeneigenschaften, wie beispielsweise die Hydrophilie, Benetzbarkeit mit Wasser oder die unspezifische Bindung (z.B. von Proteinen), nicht den Anforderungen im späteren Einsatz entsprechen und deren Oberflächen vor dem Filtrationseinsatz chemisch oder physikalisch modifiziert werden müssen.

Daher ist die in das erfindungsgemäße Filterelement integrierte Polymermembran eine dauerhaft hydrophilisierte Polymermembran. Erfindungsgemäß ist die Polymermembran dauerhaft, d.h. beständig gegenüber mechanischer, thermischer und chemischer Einwirkung, hydrophil modifiziert. Erfindungsgemäß ist die Hydrophilisierung der Polymermembran durch chemisches oder physikalisches Modifizieren einer unmodifizierten Polymermembran mit dem Hydrophilisierungsagens Poly-2-ethyloxazolin bewerkstelligt.

Hydrophilisierungsagentien sind im Stand der Technik bekannt.

So wird zum Beispiel in US 4,618,533 zur permanenten Modifizierung von Membranen aus Polymeren mit für bestimmte Filtrationsprozesse *a priori* ungeeigneten, hydrophoben Oberflächen vorgeschlagen, poröse, hydrophobe Membranen auf Basis von Poly(ether)sulfon oder Polyvinylidenfluorid mit einer Lösung eines Monomers (Hydroxyalkyl- oder Aminoalkylacrylate) und eines Initiators zu imprägnieren und anschließend die Polymerisation des Monomers durch Energiezufuhr zu initiieren, z. B. durch Erwärmung (thermische Initiierung) oder UV-Bestrahlung (unter Verwendung eines Fotoinitiators). Durch die Polymerisation werden langkettige, vernetzte Polymerketten im Inneren der porösen Matrix gebildet, die sich nicht von der Membran waschen lassen und teilweise auch auf die Membran aufgepfropft sind, woraus eine permanente Modifizierung resultiert.

Eine Alternative zum Einsatz von Initiatoren stellt die Initiierung der Polymerisation mittels Elektronenstrahlen dar. Hierbei wird die zu modifizierende Membran mit einer Lösung imprägniert, die von Acrylsäurederivaten abgeleitete Monomere enthält, und anschließend Elektronenstrahlung ausgesetzt, welche die Reaktion der Monomere initiiert. Häufig enthalten die beschriebenen Imprägnierlösungen darüber hinaus noch Vernetzer, d.h. zweifach oder allgemein mehrfach funktionelle Monomere (siehe US 4,944,879, EP 1 390 087 B1, EP 1 381 447 B1, und WO 2005/077500 A1) oder Mischungen aus mehreren Monomeren und Vernetzern (EP 1 390 087 B1, EP 1 381 447 B1 und US 7,067,058 B2). Daneben werden Varianten der thermisch induzierten Modifizierung mit einem Homopolymer und einem Vernetzer

6

(WO 2005/077500 A1) bzw. mit einem Oligomer, mit einem Monomer und optional mit einem Vernetzer beschrieben, wobei US 6,039,872 hydrophile Membranen offenbart, die aus einer hydrophoben Poly(ether)sulfonmembran und einem vernetzbaren Polyalkylenglykoldiacrylat sowie einem hydrophilen Monoacrylat herstellbar sind. DE 10 2009 004 848 B3 offenbart mikroporöse Membranen, auf deren äußerer und innerer Oberfläche durch Einwirkung von Elektronenstrahlen ein vernetztes hydrophiles Polymer fixiert ist. JP 2011-156533 A offenbart die Hydrophilisierung von auf Polysulfon basierenden Hohlfasermembranen, z. B. mit Polyethylenglykol oder Polyvinylpyrrolidon. Durch gezielte Temperaturführung bei der Herstellung und durch Wahl eines geeigneten Verhältnisses zwischen dem Durchschnittsmolekulargewicht des Polysulfon-Polymers und dem für die Hydrophilisierung gewählten Polymer resultieren Membranen, die eine hohe Oxidationsbeständigkeit mit einem geringen Bindungsvermögen für hydrophobe Proteine verbinden.

Das Gehäuse des erfindungsgemäßen Filterelements umfasst einen Kunststoff oder ein Kunststoffgemisch, wobei der Schmelzpunkt des Kunststoffs oder des Kunststoffgemisches des Gehäusebauteils, welches mit der Polymermembran schmelzgefügt ist, um mindestens 125°C niedriger als die Degradationstemperatur des Hydrophilisierungsagens ist, mit welchem die Polymermembran beständig gegenüber mechanischer, thermischer und chemischer Einwirkung hydrophil modifiziert ist. Gemäß einer bevorzugten Ausführungsform ist der Schmelzpunkt des Kunststoffs oder des Kunststoffgemisches des Gehäusebauteils, welches mit der Polymermembran schmelzgefügt ist, um mindestens 140°C, noch bevorzugter um mindestens 155°C niedriger als die Degradationstemperatur des Hydrophilisierungsagens.

Gemäß einer bevorzugten Ausführungsform umfasst das Gehäuse mindestens einen Kunststoff, ausgewählt aus der Gruppe, bestehend aus Polyolefinen, Polysulfonen, fluorierten oder teilfluorierten Polymeren, Polyamiden, Polyestern und Cellulosederivaten, sowie Gemischen davon. Gemäß einer besonders bevorzugten Ausführungsform umfasst das Gehäuse Polypropylen.

Im erfindungsgemäßen Filterelement ist die Polymermembran durch einen Schmelzfügeprozess über Schmelzfugen mit dem Gehäuse verbunden. Unter dem Begriff "Schmelzfuge" versteht man erfindungsgemäß dabei die Fuge, über die das Gehäuse mit der Polymermembran verbunden ist. Derartige Schmelzfügeprozesse sind im Stand der Technik bekannt.

Das erfindungsgemäße Filterelement ist vorteilhafterweise trocken bedampfbar, verändert sich durch die trockene Bedampfung oder alternativ durch Sterilisierung durch Bestrahlung nicht in seinen Materialeigenschaften, und kann nach Minimalbenetzung auf Integrität getestet werden.

Diese Anforderung ist dadurch erfüllt, dass die Membran gegenüber der thermischen Belastung beim Schmelzfügen bzw. gegenüber einem anschließenden trockenen Bedampfen stabil ist. Die Membran ist stabil gegenüber diesen thermischen Belastungen, wenn alle Membrankomponenten, die die Materialeigenschaften der Membran bestimmen, stabil sind gegenüber diesen thermischen Belastungen. Die Membraneigenschaften werden maßgeblich durch den Polymerwerkstoff bestimmt, aus dem die Membran hergestellt ist, beziehungsweise durch das Hydrophilisierungsagens, welches die Oberflächeneigenschaften der dauerhaft hydrophilisierten Membran bestimmt. Weiterhin ist die thermische Belastung der Membran beim Schmelzfügen umso geringer, je niedriger der Schmelzpunkt des Filterelementgehäusematerials ist.

Unter "Schmelzpunkt eines Kunststoffs oder Kunststoffgemisches" wird erfindungsgemäß der Schmelzpunkt verstanden, der an dem Kunststoff oder dem Kunststoffgemisch mittels dynamischer Differenz-Thermoanalyse (DSC) nach DIN EN ISO 11357-1:2009 bestimmt wird. Die Differenz-Thermoanalyse wird beispielsweise wie unter den Beispielen beschrieben durchgeführt.

Wie in Tabelle 1 dargestellt, zeigen zur Veranschaulichung typische Filterelementgehäusematerialien verschiedene, exemplarische Schmelzpunktbereiche:

Tabelle1:

| Material | Schmelzpunktbereich [°C] |
|---|---|
| Polypropylen (PP) | 140 - 170 |
| Polysulfon (PSU) | 170 - 190 |
| Polyvinylidenfluorid (PVDF) | 180 - 220 |
| Polyamid (PA) | 200 - 260 |
| Polyethylenterephthalat (PET) | 230 - 260 |

In technischen Schmelzfügeprozessen erreicht die Schmelze allerdings weitaus höhere Temperaturen als den Schmelzpunkt des Filterelementgehäusematerials. Wie aus Tabelle 1 ersichtlich, weist Polypropylen als Kunststoff-Grundmaterial einen erfindungsgemäß am besten geeigneten Schmelzpunktbereich von 140 - 170°C auf, da die Membran beim Fügen mit diesem Material die geringste thermische Belastung erfährt. Polypropylen ist weiterhin ebenfalls geeignet für kurzzeitige Bedampfung bei 105 - 140°C. In technischen Schmelzfügeprozessen erreicht Polypropylen im Moment des Fügens faktisch Schmelzetemperaturen von ca. 220 - 300°C. Diese Differenz zwischen Schmelzpunkt und faktisch erreichter Schmelzetemperatur beim Fügen in einem technischen Prozess gilt für andere Filterelementgehäusematerialien gleichermaßen und ist bedingt durch den technischen Charakter dieser Prozesse. Um das mehrere Millimeter tiefe Anschmelzen des zu fügenden Gehäusebauteils in einer ökonomisch vertretbaren Zeit zu erreichen, wird das Gehäusebauteil zumindest an der Oberfläche auf eine deutlich höhere Temperatur erhitzt als der Schmelzpunkt des Filterelementgehäusematerials. Folglich wird insbesondere die zum Wärmestrahler gerichtete Oberfläche des zu fügenden Gehäusebauteils eine Temperatur erreichen, welche deutlich über dem Schmelzpunkt des Filterelementgehäusematerials liegt. Die in diese Schmelze eintauchende Membran wird diesen im Bezug auf den Schmelzpunkt erhöhten Temperaturen ausgesetzt. Weiterhin ist bekannt, dass Polymerschmelzen eine relativ hohe spezifische Wärmekapazität besitzen, was zur Folge hat, dass die Abkühlung der Schmelze relativ langsam erfolgt, und somit eine höhere thermische Belastung der Membran erfolgt als bei Schmelzen mit geringerer spezifischer Wärmekapazität.

Ein Maß für die thermische Stabilität eines Materials ist die Degradationstemperatur dieses Materials. Diese wird z.B. über eine unter Luftatmosphäre durchgeführte dynamische thermogravimetrische Analyse (TGA) bestimmt, bei der das Gewicht der Probe bei steigender Probentemperatur gemessen wird. Beginnt die thermische Zersetzung, so erniedrigt sich das Gewicht der Probe. Auf diesem Weg können Materialien mit Hinsicht auf ihre thermische Stabilität untersucht werden und eine Degradationstemperatur bestimmt werden. Unter dem Begriff "Degradationstemperatur" wird dabei erfindungsgemäß die Temperatur in einer TGA-Messung verstanden, bei welcher der Masseverlust (TG %) gleich 2% ist und wobei das Gewicht der Probe also auf 98% des Einwaagegewichts gefallen ist. Hierbei wird die Probe mit einer Aufheizrate von 10 K/min erwärmt.

Es hat sich gezeigt, dass eine Differenz zwischen dem Schmelzpunkt des Kunststoffs oder des Kunststoffgemisches des Gebäudebauteils und der Degradationstemperatur des Hydrophilisierungsagens von mindestens 125°C, bevorzugt mindestens 140°C und am meisten bevorzugt mindestens 155°C, vorteilhafte Prüfbarkeitsergebnisse aufgrund der dann in technischen Prozessen stark verminderten thermischen Belastung des Hydrophilisierungsagens ergibt. Hierbei liegt der Schmelzpunkt dann um die angegebene Differenz unterhalb der Degradationstemperatur. Sollte ein Kunststoff oder Kunststoffgemisch des Gehäusebauteils mit höherem Schmelzpunkt verwendet werden, so muss ein Hydrophilisierungsagens mit ebenfalls erhöhter Degradationstemperatur verwendet werden, so dass der genannte Temperaturabstand gehalten wird. Auf diese Weise wird eine thermische Belastung des Hydrophilisierungsagens vermindert.

Gemäß dem Stand der Technik werden Hydrophilisierungsagentien entweder direkt als Polymer auf die Membranoberfläche aufgebracht, oder monomere Agentien werden in Gegenwart der Membran polymerisiert und auf diese aufgebracht.

Erfindungsgemäß wird Poly-2-ethyloxazolin als Hydrophilisierungsagens verwendet, das thermisch stabil ist, d.h. eine Degradationstemperatur von mindestens 270°C aufweist, bevorzugt mindestens 295°C und am meisten bevorzugt mindestens 315°C. Dadurch wird gewährleistet, dass die dauerhaft hydrophilisierte Polymermembran eine geeignete thermische Stabilität aufweist.

Bei der Verwendung des polymeren Hydrophilisierungsagens Poly-2-ethyloxazolin bezieht sich dabei die Angabe der Degradationstemperatur auf das Polymer. Erfindungsgemäß ist die beständig gegenüber mechanischer, thermischer und chemischer Einwirkung hydrophil modifizierte Membran, welche im Filterelement enthalten ist, im Fügebereich, abgesehen von der vorstehend beschriebenen Hydrophilisierung, nicht zusätzlich modifiziert. Unter dem Begriff "nicht zusätzlich modifiziert" wird erfindungsgemäß verstanden, dass die beständig gegenüber mechanischer, thermischer und chemischer Einwirkung hydrophil modifizierte Membran im Fügebereich weder physikalisch oder chemisch zusätzlich modifiziert ist, noch durch im Fügebereich eingebrachte Hilfsmaterialien, wie zum Beispiel Kunststofffolienstreifen, zusätzlich modifiziert ist. Da das erfindungsgemäße Filterelement im Gegensatz zu im Stand der Technik bekannten Filterelementen aufgrund der, relativ zum Schmelzpunkt des mit der Membran gefügten Gehäusematerials, hohen Degradationstemperatur des Hydrophilisierungsagens Poly-2-ethyloxazolin keine derartige zusätzliche Modifizierung der Membran im Fügebereich benötigt, entfällt dadurch vorteilhafterweise gegenüber bekannten Filterelementen im Herstellungsprozess des erfindungsgemäßen Filterelements ein zeitaufwendiger und kostspieliger Arbeitsschritt.

Ein weiterer Gegenstand der vorliegenden Erfindung betrifft ein Verfahren zur Herstellung des erfindungsgemäßen Filterelements, umfassend die Schritte:

- Bereitstellen einer porösen, beständig gegenüber mechanischer, thermischer und chemischer Einwirkung hydrophil modifizierten Polymermembran;
- Bereitstellen eines Gehäuses; und
- nachfolgendes Schmelzfügen der Polymermembran und des Gehäuses zum Verbinden der Polymermembran über Schmelzfugen mit einem Bauteil des Gehäuses;

wobei die Polymermembran im Fügebereich abgesehen von der Hydrophilisierung mit einem Hydrophilisierungsagens, welches Poly-2-ethyloxazolin ist, nicht physikalisch oder chemisch oder durch im Fügebereich eingebrachte Hilfsmaterialien zusätzlich modifiziert wird und

wobei der Schmelzpunkt des Kunststoffs oder des Kunststoffgemischs des Gehäusebauteils, welches mit der Polymermembran schmelzgefügt wird, um mindestens 125°C niedriger als die Degradationstemperatur des Hydrophilisierungsagens Poly-2-ethyloxazolin ist, mit welchem die Polymermembran beständig gegenüber mechanischer, thermischer und chemischer Einwirkung hydrophil modifiziert ist.

In den ersten beiden Schritten des erfindungsgemäßen Verfahrens werden dabei eine poröse, beständig gegenüber mechanischer, thermischer und chemischer Einwirkung hydrophil modifizierte Polymermembran und ein Gehäuse, wie sie bereits vorstehend charakterisiert wurden, bereitgestellt.

Im nächsten Schritt werden die Polymermembran und das Gehäuse zum Verbinden der Polymermembran über Schmelzfugen mit einem Bauteil des Gehäuses schmelzgefügt. Ein derartiger Schmelzfügeschritt wird gemäß im Stand der Technik bekannten Verfahren durchgeführt.

Im erfindungsgemäßen Verfahren wird die Polymermembran im Fügebereich nicht zusätzlich modifiziert. Dadurch entfällt vorteilhafterweise der zusätzliche Modifizierungsschritt im Fügebereich, der im Stand der Technik stets notwendig ist, um Integrität eines Filterelements zu gewährleisten.

Ein weiterer Gegenstand der vorliegenden Erfindung betrifft die Verwendung des erfindungsgemäßen Filterelements zur Filtration von Lösungen, zum Beispiel zur Sterilfiltration oder Virenabreicherung.

Durch die erfindungsgemäße Kombination aus niedrig schmelzendem Filterelementgehäusematerial und thermisch stabiler Polymermembran, die erfindungsgemäß mit dem thermisch stabilen Hydrophilisierungsagens Poly-2-ethyloxazolin dauerhaft hydrophilisiert wurde, kann ein Filterelement, beispielsweise in der Form einer Filterkerze, bereitgestellt werden, das vorteilhafterweise trocken bedampfbar ohne Änderung in seinen Materialeigenschaften ist, und das nach Minimalbenetzung auf Integrität getestet werden kann. Aufgrund dieser vorteilhaften Merkmale eignet sich das erfindungsgemäße Filterelement hervorragend zum Einsatz bei Filtrationen im pharmazeutischen und biotechnologischen Bereich, in welchem hohe Anforderungen an Stabilität und Sterilität des Filtermaterials gestellt werden. Zudem ist beim Herstellungsverfahren des erfindungsgemäßen Filterelements vorteilhafterweise kein zusätzlicher Schritt zur Modifizierung der Polymermembran im Fügebereich notwendig, um einen späteren Integritätstest erfolgreich durchführen zu können, wodurch das Filterelement kostengünstiger herstellbar ist als bisher im Stand der Technik bekannte Filterelemente.

Die vorliegende Erfindung wird anhand der folgenden, nicht einschränkenden Beispiele näher erläutert.

**Beispiele**

*Allgemeine Verfahren*

Bestimmung des Schmelzpunktes eines thermoplastischen Kunststoffes oder Kunststoffgemisches im Sinne der vorliegenden Erfindung mittels DSC:

Dynamische-Differenz-Thermoanalyse (DSC) wird eingesetzt, um den Schmelzpunkt eines thermoplastischen Kunststoffes zu bestimmen. Die Bestimmung erfolgt auf Grundlage von DIN EN ISO 11357-1:2009.

Bei kristallinen oder teil-kristallinen Kunststoffen wird der Schmelzpunkt als "peak melting temperature" $T_{pm}$ definiert, wie unter Punkt 10 der DIN EN ISO 11357-3:2011(E) beschrieben. Die Bestimmung von $T_{pm}$ erfolgt ebenfalls nach dieser DIN Norm. Weist die DSC-Kurve des Kunststoffes mehrere $T_{pm}$ auf, wird als Maß für den Schmelzpunkt des Kunststoffes die $T_{pm}$ mit dem höchsten Wert gewählt.

Bei amorphen oder semi-kristallinen Kunststoffen wird der Schmelzpunkt als "midpoint temperature" $T_{mg}$ definiert, wie unter Punkt 3 der DIN EN ISO 11357-2:1999(E) beschrieben. Die Bestimmung von $T_{mg}$ erfolgt ebenfalls nach dieser DIN Norm. Weist die DSC-Kurve des Kunststoffes mehrere $T_{mg}$ auf, wird als Maß für den Schmelzpunkt des Kunststoffes die $T_{mg}$ mit dem höchsten Wert gewählt.

Herstellung von Polymeren zur TGA-Analyse aus Monomeren, die zur Hydrophilisierung eingesetzt werden:

Die Monomere werden in der gleichen Konzentration und im gleichen Lösungsmittel eingesetzt, wie bei der Hydrophilisierung der Membran (vgl. Ausführungsbeispiel 1). Die Polymerisierung erfolgt dann unter den gleichen Bedingungen, wie beim Hydrophilisierungsprozess der Membran, lediglich in Abwesenheit der Membran: Insbesondere die Temperatur, der Sauerstoffgehalt, die Schichtdicke, gegebenenfalls die Intensität oder Dosis der Bestrahlung und/oder die Konzentration und Art des Initiators werden analog zum Herstellungsprozess der Membran eingestellt beziehungsweise verwendet.

Nach der Polymerisierung wird das erhaltene polymere Hydrophilisierungsagens mit dem Lösungsmittel der Imprägnierlösung gewaschen und bei einer Temperatur von 110°C bis zur Gewichtskonstanz getrocknet. Das erhaltene Polymer wird pulverisiert und eine Probe zur TGA entnommen.

Bestimmung der Degradationstemperatur eines Hydrophilisierungsagens im Sinne der vorliegenden Erfindung mittels TGA:

Dynamische Thermogravimetrie (TGA) wird eingesetzt, um die Degradationstemperatur des Hydrophilisierungsagens zu bestimmen. Die Bestimmung erfolgt in Anlehnung an die DIN EN ISO 11358:1997. Hierbei wird die Änderung der Masse einer Probe des Hydrophilisierungsagens unter strömender Luftatmosphäre in Abhängigkeit von der mit einer konstanten Rate ansteigenden Temperatur von 10 K/min aufgezeichnet. Vor der TGA-Messung wird das Hydrophilisierungsagens bei 110°C bis zur Massenkonstanz vorgetrocknet. Wie in der DIN-Norm beschrieben, ist $m_s$ definiert als die Masse der Probe vor der Aufheizung. Die erfindungsgemäß definierte Degradationstemperatur ist die Temperatur, bei welcher die Probenmasse 2% ihres Gewichtes verloren hat, also nur noch 98% der Masse vor der Aufheizung vorliegen, d.h. Probenmasse = $0,98 \times$ ms.

Trockene Bedampfung:

Ein Filterelement, beispielsweise eine 10" Filterkerze, wird trocken in ein Edelstahlgehäuse eingesetzt, und das Gehäuse an eine Dampfversorgung angeschlossen. Die Dampfzufuhr wird geöffnet, Dampf durchströmt das Filterelement im Gehäuse und mit einem nach dem Gehäuse angeordneten Regelventil wird ein Dampfdruck von 2 bar, entsprechend einer Dampftemperatur von 134°C, eingestellt. Dabei wird mit Hilfe einer Regelung der Dampfzufuhr ein Differenzdruck zwischen Ein- und Ausgang des Filtergehäuses von 0,05 bis 0,1 bar eingestellt. Nach 30 Minuten wird die Dampfzufuhr geschlossen und das Gehäuse bis zum Erreichen von Temperaturen < 30°C mit Umgebungsluft bei Raumtemperatur abgekühlt.

Nasse Bedampfung:

Das nasse Bedampfen entspricht dem Bedampfungsablauf des trockenen Bedampfens, jedoch wird abweichend das 10" Filterelement vor dem Einsetzen in das Filtergehäuse für 90 Sekunden mit Wasser benetzt und nass eingesetzt. Da Dampf bei Öffnen der Dampfversorgung die wasserbenetzte Membran nicht durchströmen kann, wird die Dampfzufuhr nur minimal geöffnet und der Dampf am Filtergehäuse durch Entlüftungsventile abgelassen, bis Gehäuse und Filterelement eine Temperatur > 100°C erreichen und Dampf das Filterelement passieren kann. Der Dampfdruck übersteigt zu keinem Zeitpunkt einen Differenzdruck von 0,5 bar zwischen Ein- und Ausgang des Gehäuses. Der Differenzdruck nach Erreichen einer Temperatur >100°C und damit Passieren des Filterelements beträgt 0,05 bis 0,1bar.

Integritätstest, Blasendruck- (Bubblepoint-) und Diffusionstest:

Der Integritätstest, bestehend aus einem Blasendruck- (Bubblepoint-) und Diffusionstest, wird mit einem Integritätstestgerät Sartockeck® 3 und Sartocheck® 4 (Fa. Sartorius Stedim Biotech GmbH) durchgeführt. Einstellparameter sind 3 Minuten Stabilisierungszeit, 3 Minuten Testzeit für den Diffusionstest, sowie der für das entsprechende Filterelement vom Hersteller vorgegebene Diffusionstestdruck (für hier beschriebene erfindungsgemäße Filterelemente 2,5 bar).

Porometer:

Messgerät PMI, Porous Materials Inc., USA, Capillary Flow Porometer

Handelsübliche Vergileichs-Filterelemente:

Zum Vergleich wurden folgende handelsübliche Filterelemente untersucht:

Pall, Typ: Supor EKV 0,2 $\mu$m, Prod.code: AB1EKV7PH4, Ch. IR7867, (2-lagig PES Membran);
Pall, Typ: Fluorodyne EX EDF 0,2 $\mu$m, Prod.code: AB1UEDF7PH4, Ch. IR8838, (je 1 Lage PES u. PVDF Membran);
Pall, Typ: Fluorodyne II 0,2 $\mu$m, Prod.code: AB1DFL7PH4, Ch. IR8255, (2 Lagen PVDF Membran);
Millipore: Typ Durapore 0,22 $\mu$m, Prod.code: CVGL7TP3, Ch. F1KA97385, (1 Lage PVDF Membran);
Millipore, Typ: Express SHC, Prod.code: CHGE01TS3, Ch. C1EA82133, (2 Lagen PES Membran);
3M Cuno, Typ: Cuno 3M Life Assure, PNA020F01BA,Ch. M01812-002, (1 Lage PES Membran).

*Ausführungsbeispiele*

1. Dauerhafte Hydrophilisierung von Membranen:

Eine Ausgangsmembran Typ 15407 (Fa Sartorius Stedim Biotech GmbH), eine Sterilfiltermembran aus Polyethersulfon mit einer mittleren Porengröße von 0,2 $\mu$m, wurde mit einer Imprägnierlösung des zur dauerhaften Hydrophilisierung verwendeten Hydrophilisierungsagens benetzt (vergleiche nachfolgende Tabelle 2). Das Hydrophilisierungsagens ist in den beschriebenen Beispielen ein Polymer. Die Konzentration des Hydrophilisierungsagens in der Imprägnierlösung liegt im Bereich von 0,5 bis 6,0 Gewichtsprozent, wobei als Lösungsmittel Wasser verwendet wird. Nach der Kontaktierung der Membran mit der Imprägnierlösung wurde die Membran zwischen zwei Polyethylen-(PE-)Folien gelegt und überschüssige Imprägnierlösung mit einem Roller von der Membran verdrängt oder zwischen zwei gummierten Walzen abgequetscht. Anschließend wurde die imprägnierte Membran Elektronenstrahlung (EC-Lab 400, Crosslinking AB, Schweden) ausgesetzt, wobei eine Beschleunigungsspannung von 190 kV und Dosen von 25 bis 75 kGy zum Einsatz kamen. Die Bestrahlungszone wurde mit Stickstoff inertisiert, d.h. vorhandener Sauerstoff wurde durch Stickstoff verdrängt. Nach der Bestrahlung wurde die Membran mit geeigneten Lösungsmitteln extrahiert, um nicht dauerhaft gebundenes Hydrophilisierungsagens zu lösen und die Dauerhaftigkeit der Hydrophilisierung zu zeigen. Anschließend wurde die modifizierte Membran im Trockenschrank getrocknet und auf ihre Eigenschaften hin untersucht.

Tabelle 2:

| Abkürzung | Name, CAS-Nr., Molekulargewicht MW | Polymerkonzentration in der Imprägnierlösung | Bestrahlungsdosis |
|---|---|---|---|
| PVP | Polyvinylpyrrolidon, 9003-39-8, 50.000 | 1,3 Gew% | 50 kGy |
| POZ | Poly-2-ethyloxazolin, 25805-17-8, 5000 | 0,5 Gew% | 75 kGy |
| PEG | Polyethylenglykol, 25322-68-3, 4.000 | 0,7 Gew% | 70 kGy |
| PVP-VA (VA: Vinylacetat) 630S | Polyvinylpyrrolidon-co-Vinylacetat S630 25086-89-9, 51.000 | 1,0 Gew% | 50 kGy |

2. Thermoanalytische Untersuchungen an Polymeren (TGA):

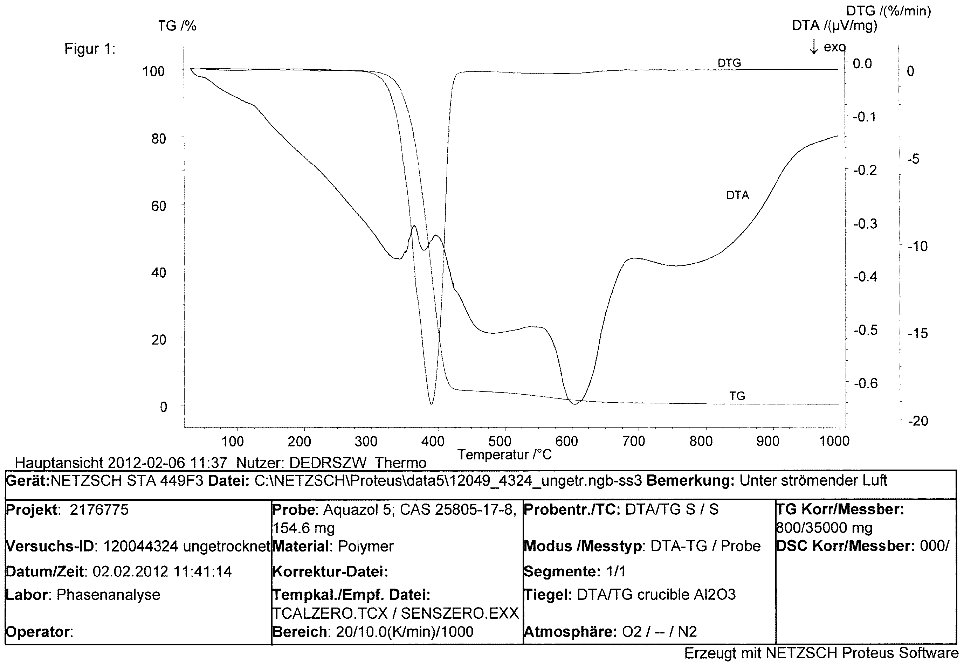

Die Untersuchungen erfolgten mit Hilfe des Simultanthermoanalysengerätes STA 449 F3 "Jupiter" (Netzsch-Gerätebau GmbH) unter strömender Luftatmosphäre mit einer Heizrate von 10 K/min. Die Polymere waren bei 110°C vorgetrocknet. Der analysierte Temperaturbereich reichte von 10 bis mindestens 500°C. Die Durchführung und Auswertung der Ergebnisse erfolgte in Anlehnung an DIN EN ISO 11358. Um verschiedene Polymere zu vergleichen, wurde die Degradationstemperatur als die Temperatur definiert, bei welcher der Masseverlust gleich 2% ist. Beispielhaft sind die Daten der TGA für Aquazol® 5 (Poly-2-ethyloxazolin, MW 5.000; CAS-Nr. 25805-17-8) illustriert (Figur 1).

Tabelle 3: Degradationstemperaturen der in den Beispielen verwendeten Hydrophilisierungsagentien

| Abkürzung | Name, CAS-Nr, Molekulargewicht MW | Degradationstemperatur |
|---|---|---|
| POZ | Poly-2-ethyloxazolin, 25805-17-8, 5.000 | 328°C |
| PVP | Polyvinylpyrrolidon, 9003-39-8, 50.000 | 300°C |
| PEG | Polyethylenglykol, 25322-68-3, 4.000 | 275°C |
| PVP-VA 630S | Polyvinylpyrrolidon-co-Vinylacetat S630, 25086-89-9, 51.000 | 250°C |

3. Aufbau von Filterelementen mit Schmelzfügeprozess

Der Aufbau von Filterelementen erfolgt durch Plissieren einer gemäß Ausführungsbeispiel 1 mit POZ, PVP, PEG oder PVP-VA dauerhaft hydrophilisierten Membran. Dabei ist zuoberst und zuunterst der dauerhaft hydrophilisierten Membran ein Polypropylen-Spinvlies auf einer Messerfaltmaschine angeordnet. Der plissierte Membranverbund wird in einem 10"-Polypropylen-Außen- sowie -Innengehäuse (Fa. Sartorius Stedim Biotech GmbH) angeordnet. Polypropylen-Endkappen mit einem mittels DSC (vergleiche "Allgemeine Verfahren") gemessenen Schmelzpunkt $T_{pm}$ von 166°C werden angeschmolzen und aufgesetzt. Dazu wird ein Metallblock auf eine Temperatur aufgeheizt, welche oberhalb des Schmelzpunktes der für die zum Schmelzfügen verwendeten Gehäusebauteile liegt, und für 60 Sekunden zum Herstellen der Schmelze 8 bis 12 mm vor den Endkappen positioniert. Anschließend wird der Membranverbund mit Innen- und Außengehäuse in die Polymerschmelze eingesetzt. Anschließend werden mit Hilfe von beidseitigem Anschmelzen und Fügen von Endkappen und Anschlussbauteilen aus Polypropylen Abschlusskappe und Anschlussadapter gefügt. Die fertig gestellten Kerzen durchlaufen einen Spülschritt mit Wasser von 90 Sekunden, Autoklavieren bei 134°C für 30 Minuten, (erneutes) gleichartiges Spülen, einen Integritätstest sowie Trocknen für 12 Stunden bei 80°C in einem Konvektionstrockenschrank.

4. Integritätstest an Filterelementen nach trockenem und nassem Bedampfen

Tabelle 4 vergleicht die Ergebnisse eines Integritätstests von handelsüblichen Filterelementen mit erfindungsgemäßen Filterelementen nach trockenem Bedampfen. Es sind Filterelemente bekannt, die den Integritätstest nach trockenem Bedampfen (134°C, 30 Minuten) mit anschließender Minimalbenetzung aufgrund mangelhafter Benetzung nicht bestehen:

Tabelle 4: Integritätstest nach trockenem Bedampfen

| Produkt, Prod.code, Lot.No | Diffusion/ Grenzwert [ml/min] | Bubblepoint/ Grenzwert [bar] | Integritätstest bestanden |
|---|---|---|---|
| *handelsübliche Filterelemente* | | | |
| Millipore Express SHC, CHGE71TS3, Ch. C1EA82133 | 18,4 / < 28,2 | 5,44 / > 4,0 | ja |
| Millipore Durapore®, CVGL71TP3, Ch. F1KA97385 | 12 / < 13,3 | 3,36 / > 3,45 | nein |
| Pall Supor® EKV, AB1 EKV7PH4, Ch. IR7867 | 168 / < 17 | 3,29 / > 3,2 | nein |
| Pall Fluorodyne® EX EDF, AB1 UEDF7PH4, Ch. IR8838 | 42,5 / < 30 | 3,44 / > 3,2 | nein |
| Pall Fluorodyne® II, AB1DFL7PH4, Ch. IR8255 | 16,2 / < 12 | 3,23 / > 3,2 | nein |
| Cuno 3M Life Assure, PNA020F01BA, Ch. M01812-002 | n.b. / < 51 | n.b. / > 3,2 | nein |
| *Filterelemente* | | | |
| Erfindungsgemäßes Element PES/POZ, 10", Ch. 11022083 (Membran nach Tabelle 2) | 16,8 / < 25 | 4,03 / > 3,5 | ja |
| Nicht erfindungsgemäßes Element PES/PVP, 10", Ch. 120008583 (Membran nach Tabelle 2) | 12,5 / < 13 | 4,15 / > 3,5 | ja |
| *Vergleichsbeispiele nicht erfindungsgemäßer Filterelemente* | | | |
| Vergleichsbeispiel: Element PES/PEG, 10", Ch. 09005883 (Membran nach Tabelle 2) | 16,1 / < 13 | 3,81 / > 3,5 | nein |
| Vergleichsbeispiel: Element PES/PVP-VA, 10", Ch. 09011983 (Membran nach Tabelle 2) | 17,4 / < 13 | 3,90 / > 3,5 | nein |

Vergleichend bestehen Filterelemente den Integritätstest erfolgreich nach nassem Bedampfen (134°C, 30 Minuten) mit anschließender Minimalbenetzung (Tabelle 5):

Tabelle 5: Integritätstest nach nassem Bedampfen

| Produkt, Prod.code, Lot.No | Diffusion/ Grenzwert [ml/min] | Bubblepoint/ Grenzwert [bar] | Integritätstest bestanden |
|---|---|---|---|
| *handelsübliche Filterelemente* | | | |
| Millipore Express SHC, CHGE71TS3, Ch. C1 EA82133 | 17,5 / < 28,2 | 5,5 / > 4,0 | ja |
| Millipore Durapore®, CVGL71TP3, Ch. F1KA97385 | 10,8 / < 13,3 | 3,29 / > 3,45 | nein |
| Pall Supor® EKV, AB1EKV7PH4, Ch. IR7867 | 13,5 / < 17 | 3,45 / > 3,2 | ja |
| Pall Fluorodyne® EX EDF, AB1 UEDF7PH4, Ch. IR8838 | 23,3 / < 30 | 4,38 / > 3,2 | ja |
| Pall Fluorodyne® II, AB1DFL7PH4, Ch. IR8255 | 10,3 / < 12 | 3,88 / > 3,2 | ja |
| Cuno 3M Life Assure, PNA020F01BA, Ch. M01812-002 | 43,3 / < 51 | 4,54 / > 3,2 | ja |
| *Filterelemente* | | | |
| Erfindungsgemäßes Element PES/POZ, 10", Ch. 11022083 (Membran nach Tabelle 2) | 18,1 / < 25 | 3,83 / > 3,5 | ja |
| Nicht erfindungsgemäßes Element PES/PVP, 10", Ch. 120008583 (Membran nach Tabelle 2) | 12,7 / < 17 | 3,95 / > 3,5 | ja |
| *Vergleichsbeispiele nicht erfindungsgemäßer Filterelemente* | | | |
| Vergleichsbeispiel: Element PES/PEG, 10", Ch. 09005883 (Membran nach Tabelle 2) | 11,1 / < 13 | 4,47 / > 3,5 | ja |
| Vergleichsbeispiel: Element PES/PVP-VA, 10", Ch. 09011983 (Membran nach Tabelle 2) | 10,4 / < 13 | 4,05 / > 3,5 | ja |

Millipore-Express-SHC Filterelemente werden mit Folienstreifen als Hilfsmittel im Kappenabdichtungsbereich gefertigt und erfüllen nicht die obigen Anforderungen. Millipore-Durapore®-Filterelemente weisen grundsätzlich, also auch schon bei nassem Bedampfen oder bei nicht minimaler Benetzung, zu niedrige Blasendruckwerte (Bubblepoint-Werte) auf und erfüllen daher nicht die Anforderungen. Pall-Fluorodyne®-II- und -EX-Filterelemente zeigen bei den aufgebrachten thermischen Belastungen Degradation und erfüllen nicht die Anforderungen. Die in diesen Produkten enthaltenen Mikrofiltrationsmembranen verfärben/oxidieren durch die Bedampfung (siehe Ausführungsbeispiel 6).

Die Diffusionsergebnisse des Integritätstests können in Abhängigkeit von der Degradationstemperatur dargestellt werden. Je niedriger die Degradationstemperatur des Hydrophilisierungsagens, desto höher ist die Schädigung der Hydrophilisierung beim thermischen Fügen bei der Filterelementherstellung. Es entstehen also umso größere, nicht benetzbare Membranbereiche und in der Folge umso größere Diffusionsströme, je höher die Schädigung, also je niedriger die Degradationstemperatur ist. Es ergibt sich damit eine Reihenfolge fallender Degradationstemperaturen gegenüber steigenden, auf die nominelle Filterfläche normierten Diffusionswerten:

Temperatur:       328       300       275       250°C
Diffusionswert:   16,8      20,8      26,8      29 ml/min/m$^2$,

welche mit Zuordnung zu den weiteren Daten in Tabelle 6 dargestellt ist.

Tabelle 6: Integritätstest nach trockenem Bedampfen und Diffusionsergebnis gegenüber Degradationstemperatur des Hydrophilisierungsagens

| Produkt, Prod.code, Lot.No | Diffusion [ml/min/m$^2$] Mittelwert je Charge | Integritätstest bestanden | Degradationstemperatur |
|---|---|---|---|
| *Filterelemente* | | | |
| Erfindungsgemäßes Element PES/POZ, 10", Ch. 11022083 (Membran nach Tabelle 2) | 16,8 | ja | 328°C |
| Nicht erfindungsgemäßes Element PES/PVP, 10", Ch. 120008583 (Membran nach Tabelle 2) | 20,8 | ja | 300°C |
| *Vergleichsbeispiele nicht erfindungsgemäßer Filterelemente* | | | |
| Vergleichsbeispiel: Element PES/PEG, 10", Ch. 09005883 (Membran nach Tabelle 2) | 26,8 | nein | 275°C |
| Vergleichsbeispiel: Element PES/PVP-VA, 10", Ch. 09011983 (Membran nach Tabelle 2) | 29 | nein | 250°C |

### 5. Degradation / Verfärbung der Membranen von Filterelementen nach thermischer Behandlung

Für das Produkt Durapore® 0,22 μm wird eine Degradation, sichtbar durch die bräunliche Verfärbung der Polymermembran, festgestellt. Für das Produkt Fluorodyne® II und Fluorodyne® EX EDF wird ebenfalls eine Degradation, sichtbar durch die bräunliche Verfärbung der Polymermembran, festgestellt.

Die Messung der Verfärbung erfolgt mit einem Reflexionsdensitometer D186, Fa. Greteg, Althardstr. 70, CH-8105 Regensdorf.

Das Membranmaterial wird aus einem Filterelement im Auslieferungszustand sowie einem Filterelement, welches einer trockenen Bedampfung unterzogen wurde, entnommen. Das Densitometer D186 wird mit der vorgesehenen Kalibrierfarbkarte kalibriert. Alle Membranen wurden benetzt und liegen eben auf derselben PP-Unterlageplatte, so dass das Messgerät eben auf die Membran aufgesetzt und gemessen werden kann. Die Kalibrierung für die Farbe Gelb beträgt 1,48 Einheiten. Angegeben werden im Folgenden die Ergebnisse der Messung des Gelbanteils:

Probe 1: Fluorodyne® II, 10" Kerze, Hauptfiltermembran, Material wie angegeben

| Ausgangsmembran | nach trockenem Bedampfen |
|---|---|
| 0,42 | 0,63 |
| 0,42 | 0,62 |
| 0,44 | 0,62 |

Das Membranmaterial weist nach thermischer Behandlung eine Verfärbung in den Gelb-/Braun-Bereich auf, so dass auf thermisch oxidativen Abbau des Membranmaterials geschlossen wird.

Probe 2: Fluorodyne® EX EDF, 10" Hauptfiltermembran, Material wie angegeben

| Ausgangsmembran | nach trockenem Bedampfen |
|---|---|
| 0,42 | 0,61 |
| 0,44 | 0,62 |

Das Membranmaterial weist nach thermischer Behandlung eine Verfärbung in den Gelb-/Braun-Bereich auf, so dass auf thermisch oxidativen Abbau des Membranmaterials geschlossen wird.

Probe 3: Durapore® 0,22, 10" Membran, Material wie angegeben

| Ausgangsmembran | nach trockenem Bedampfen |
|---|---|
| 0,24 | 0,56 |
| 0,24 | 0,59 |

Das Membranmaterial weist nach thermischer Behandlung eine Verfärbung in den Gelb-/Braun-Bereich auf, so dass auf thermisch oxidativen Abbau des Membranmaterials geschlossen wird.

Probe 4: erfindungsgemäßes Filterelement PES-POZ,
10" Hauptfiltermembran,

| Ausgangsmembran | nach trockenem Bedampfen |
|---|---|
| 0 | 0 |
| 0 | 0 |
| 0 | 0 |

Das Membranmaterial weist nach thermischer Behandlung keine Verfärbung in den Gelb-/Braun-Bereich auf. Es liegt kein Hinweis auf thermisch oxidativen Abbau des Membranmaterials vor.

Probe 5: Nicht erfindungsgemäßes Filterelement PES-PVP,
10" Hauptfiltermembran,

| Ausgangsmembran | nach trockenem Bedampfen |
|---|---|
| 0 | 0 |
| 0 | 0 |
| 0 | 0 |

Das Membranmaterial weist nach thermischer Behandlung keine Verfärbung in den Gelb/Braun-Bereich auf. Es liegt kein Hinweis auf thermisch oxidativen Abbau des Membranmaterials vor.

Figur 1 zeigt ein Thermogramm von Aquazol® 5 (Poly-2-ethyloxazolin, MW 5.000; CAS-Nr. 25805-17-8).

## Patentansprüche

1. Schmelzgefügtes Filterelement mit verbesserter Prüfbarkeit nach trockenem Bedampfen oder alternativ nach Sterilisierung durch Bestrahlung, umfassend ein Gehäuse, das einen Kunststoff oder ein Kunststoffgemisch umfasst, und eine poröse, beständig gegenüber mechanischer, thermischer und chemischer Einwirkung hydrophil modifizierte Polymermembran, deren Oberflächenspannung bei 20 °C größer als 72 mN/m ist, wobei die Hydrophilisierung der Polymermembran durch chemisches oder physikalisches Modifizieren einer unmodifizierten Polymermembran mit einem Hydrophilisierungsagens bewerkstelligt ist,
die Polymermembran durch einen Schmelzfügeprozess über Schmelzfugen mit dem Gehäuse verbunden ist,
die Polymermembran im Fügebereich abgesehen von der Hydrophilisierung mit dem Hydrophilisierungsagens nicht physikalisch oder chemisch oder durch im Fügebereich eingebrachte Hilfsmaterialien zusätzlich modifiziert ist, wobei der Schmelzpunkt des Kunststoffs oder des Kunststoffgemisches des Gehäusebauteils, welches mit der Polymermembran schmelzgefügt ist, um mindestens 125°C niedriger als die Degradationstemperatur des Hydrophilisierungsagens ist, mit welchem die Polymermembran beständig gegenüber mechanischer, thermischer und chemischer Einwirkung hydrophilisiert ist,
wobei die Oberflächenspannung und die Degradationstemperatur wie in der Beschreibung ausgeführt bestimmt werden und wobei der Schmelzpunkt nach DIN EN ISO 11357-1:2009 wie in der Beschreibung ausgeführt bestimmt wird, **dadurch gekennzeichnet,**
**dass** das Hydrophilisierungsagens Poly-2-ethyloxazolin ist.

2. Filterelement nach Anspruch 1, wobei der Schmelzpunkt des Kunststoff oder Kunststoffgemisches um mindestens 140°C niedriger als die Degradationstemperatur des Hydrophilisierungsagens Poly-2-ethyloxazolin ist.

3. Filterelement nach einem der Ansprüche 1 bis 2, wobei das Gehäuse mindestens einen Kunststoff umfasst, ausgewählt aus der Gruppe, bestehend aus Polyolefinen, Polysulfonen, fluorierten oder teilfluorierten Polymeren, Polyamiden, Polyestern und Cellulosederivaten, sowie Gemischen davon.

4. Filterelement nach einem der Ansprüche 1 bis 3, wobei das Gehäuse Polypropylen umfasst.

5. Filterelement nach einem der Ansprüche 1 bis 4, wobei die Polymermembran mindestens einen Kunststoff umfasst, ausgewählt aus der Gruppe, bestehend aus Polysulfon, Polyethersulfon, Celluloseacetat, Cellulosenitrat, Polyvinylidenfluorid, Polypropylen, Polyethylen, Polytetrafluorethylen, Polyamid und Copolymeren von diesen, sowie Gemischen davon.

6. Filterelement nach einem der Ansprüche 1 bis 5, wobei die Polymermembran Polyethersulfon umfasst.

7. Filterelement nach einem der Ansprüche 1 bis 6, wobei das Hydrophilisierungsagens Poly-2-ethyloxazolin eine Degradationstemperatur von mindestens 270°C aufweist.

8. Verfahren zur Herstellung eines Filterelements nach einem der Ansprüche 1 bis 7, umfassend die Schritte:

   - Bereitstellen einer porösen, beständig gegenüber mechanischer, thermischer und chemischer Einwirkung hydrophil modifizierten Polymermembran;
   - Bereitstellen eines Gehäuses; und
   - nachfolgendes Schmelzfügen der Polymermembran und des Gehäuses zum Verbinden der Polymermembran über Schmelzfugen mit einem Bauteil des Gehäuses;

   wobei die Polymermembran im Fügebereich abgesehen von der Hydrophilisierung mit einem Hydrophilisierungsagens nicht physikalisch oder chemisch oder durch im Fügebereich eingebrachte Hilfsmaterialien zusätzlich modifiziert wird,
   wobei der Schmelzpunkt des Kunststoffs oder des Kunststoffgemischs des Gehäusebauteils, welches mit der Polymermembran schmelzgefügt wird, um mindestens 125°C niedriger als die Degradationstemperatur des Hydrophilisierungsagens ist, mit welchem die Polymermembran beständig gegenüber mechanischer, thermischer und chemischer Einwirkung hydrophil modifiziert ist,
   wobei die Degradationstemperatur wie in der Beschreibung ausgeführt bestimmt wird und wobei der Schmelzpunkt nach DIN EN ISO 11357-1:2009 wie in der Beschreibung ausgeführt bestimmt wird,
   **dadurch gekennzeichnet,**
   **dass** das Hydrophilisierungsagens Poly-2-ethyloxazolin ist.

9. Verwendung des Filterelements nach einem der Ansprüche 1 bis 7 zur Filtration von Lösungen.

## Claims

1. A melt-joined filter element with improved testability after dry steaming or alternatively after sterilization by irradiation, comprising a housing that comprises a plastic or a plastic mixture, and a porous hydrophilically modified polymer membrane resistant to mechanical, thermal and chemical influence, whose surface tension at 20°C is greater than 72 mN/m, wherein the hydrophilization of the polymer membrane is accomplished by chemical or physical modification of an unmodified polymer membrane with a hydrophilization agent,
the polymer membrane is connected to the housing by a melt-joining process via melt joining,
the polymer membrane in the join area is not additionally modified physically or chemically or by auxiliary materials introduced into the join area apart from the hydrophilization with the hydrophilization agent
wherein the melting point of the plastic or of the plastic mixture of the housing component, which is melt-joined to the polymer membrane, is lower by at least 125°C than the degradation temperature of the hydrophilization agent, with which the polymer membrane is hydrophilized to be resistant to mechanical, thermal and chemical influence, wherein the surface tension and the degradation temperature are determined as stated in the description and wherein the melting point in accordance with DIN EN ISO 11357-1:2009 is determined as stated in the description,
**characterized in that** the hydrophilization agent is poly-2-ethyloxazoline.

2. The filter element according to claim 1, wherein the melting point of the plastic or of the plastic mixture is at least 140°C lower than the degradation temperature of the hydrophilization agent poly-2-ethyloxazoline.

3.  The filter element according to any of claims 1 to 2, wherein the housing comprises at least one plastic selected from the group consisting of polyolefins, polysulfones, fluorinated or partially fluorinated polymers, polyamides, polyesters and cellulose derivatives, as well as mixtures thereof.

4.  The filter element according to any of claims 1 to 3, wherein the housing comprises polypropylene.

5.  The filter element according to any of claims 1 to 4, wherein the polymer membrane comprises at least one plastic selected from the group consisting of polysulfone, polyethersulfone, cellulose acetate, nitrocellulose, polyvinylidene fluoride, polypropylene, polyethylene, polytetrafluoroethylene, polyamide and copolymers of these, as well as mixtures thereof.

6.  The filter element according to any of claims 1 to 5, wherein the polymer membrane comprises polyethersulfone.

7.  The filter element according to any of claims 1 to 6, wherein the hydrophilization agent poly-2-ethyloxazoline has a degradation temperature of at least 270°C.

8.  A method for manufacturing a filter element according to any of claims 1 to 7, comprising the steps:

    - provision of a porous hydrophilically modified polymer membrane resistant to mechanical, thermal and chemical influence;
    - provision of a housing; and
    - subsequent melt joining of the polymer membrane and the housing for connecting the polymer membrane to a component of the housing via melt joining;

    wherein the polymer membrane in the join area is not additionally modified physically or chemically or by auxiliary materials introduced into the join area apart from the hydrophilization with the hydrophilization agent,
    wherein the melting point of the plastic or of the plastic mixture of the housing component, which is melt-joined to the polymer membrane, is lower by at least 125°C than the degradation temperature of the hydrophilization agent, with which the polymer membrane is hydrophilized to be resistant to mechanical, thermal and chemical influence,
    wherein the degradation temperature is determined as stated in the description and wherein the melting point in accordance with DIN EN ISO 11357-1:2009 is determined as stated in the description,
    **characterized in that** the hydrophilization agent is poly-2-ethyloxazoline.

9.  Use of the filter element according to any of claims 1 to 7 for the filtration of solutions.

**Revendications**

1.  Élément filtrant assemblé par fusion, présentant une aptitude à l'essai améliorée après un traitement à la vapeur sèche ou, en variante, après stérilisation par irradiation, comprenant un boîtier qui présente une matière plastique ou un mélange de matières plastiques, et une membrane polymère poreuse, hydrophilisée pour être résistante à l'action mécanique, thermique et chimique, dont la tension superficielle à 20 °C est supérieure à 72 mN/m, dans lequel l'hydrophilisation de la membrane polymère est réalisée par modification chimique ou physique d'une membrane polymère non modifiée par un agent d'hydrophilisation,
    la membrane polymère est reliée au boîtier par un procédé d'assemblage par fusion par le biais d'un joint fondu,
    la membrane polymère est modifiée en plus dans la zone de l'assemblage, abstraction faite de l'hydrophilisation avec l'agent d'hydrophilisation, non physiquement ou chimiquement ou par des matières auxiliaires introduites dans la zone d'assemblage,
    dans lequel le point de fusion de la matière plastique ou du mélange de matières plastiques du composant du boîtier qui est assemblé par fusion avec la membrane polymère est inférieur d'au moins 125 °C à la température de dégradation de l'agent d'hydrophilisation, avec lequel la membrane polymère est hydrophilisée pour être résistante à l'action mécanique, thermique et chimique,
    dans lequel la tension superficielle et la température de dégradation sont déterminées comme exposé dans la description, et le point de fusion est déterminé d'après la norme DIN EN ISO 11357-1:2009 comme exposé dans la description,
    **caractérisé en ce que** l'agent d'hydrophilisation est la poly-2-éthyloxazoline.

2.  Élément filtrant selon la revendication 1, dans lequel le point de fusion de la matière plastique ou du mélange de matières plastiques est inférieur d'au moins 140 °C à la température de dégradation de l'agent d'hydrophilisation poly-2-éthyloxazoline.

3. Élément filtrant selon l'une des revendications 1 à 2, dans lequel le boîtier comprend au moins une matière plastique, choisie dans le groupe constitué des polyoléfines, des polysulfones, des polymères fluorés ou partiellement fluorés, des polyamides, des polyesters, et des dérivés de cellulose, ainsi que des mélanges de ceux-ci.

4. Élément filtrant selon l'une des revendications 1 à 3, dans lequel le boîtier comprend du polypropylène.

5. Élément filtrant selon l'une des revendications 1 à 4, dans lequel la membrane polymère comprend au moins une matière plastique, choisie dans le groupe constitué de la polysulfone, de la polyéthersulfone, de l'acétate de cellulose, du nitrate de cellulose, du fluorure de polyvinylidène, du polypropylène, du polyéthylène, du polytétrafluoroéthylène, du polyamide et des copolymères de ceux-ci ainsi que des mélanges de ceux-ci.

6. Élément filtrant selon l'une des revendications 1 à 5, dans lequel la membrane polymère comprend de la polyéthersulfone.

7. Élément filtrant selon l'une des revendications 1 à 6, dans lequel l'agent d'hydrophilisation poly-2-éthyloxazoline présente une température de dégradation d'au moins 270 °C.

8. Procédé de fabrication d'un élément filtrant selon l'une des revendications 1 à 7, comprenant les étapes consistant à :

- fournir une membrane polymère poreuse, hydrophilisée pour être résistante à l'action mécanique, thermique et chimique ;
- fournir un boîtier ; et
- assembler ensuite par fusion la membrane polymère et le boîtier pour relier la membrane polymère par l'intermédiaire de l'assemblage par fusion avec un composant du boîtier ;

dans lequel la membrane polymère est modifiée en plus dans la zone de l'assemblage, abstraction faite de l'hydrophilisation avec l'agent d'hydrophilisation, non physiquement ou chimiquement ou par des matières auxiliaires introduites dans la zone d'assemblage,
dans lequel le point de fusion de la matière plastique ou du mélange de matières plastiques du composant du boîtier qui est assemblé par fusion avec la membrane polymère est inférieur d'au moins 125 °C à la température de dégradation de l'agent d'hydrophilisation, avec lequel la membrane polymère est hydrophilisée pour être résistante à l'action mécanique, thermique et chimique,
dans lequel la température de dégradation est déterminée comme exposé dans la description, et le point de fusion est déterminé d'après la norme DIN EN ISO 11357-1:2009 comme exposé dans la description,
**caractérisé en ce que** l'agent d'hydrophilisation est la poly-2-éthyloxazoline.

9. Utilisation de l'élément filtrant selon l'une des revendications 1 à 7 pour la filtration de solutions.

Figur 1:

Hauptansicht 2012-02-06 11:37  Nutzer: DEDRSZW_Thermo

| Gerät:NETZSCH STA 449F3 Datei: C:\NETZSCH\Proteus\data5\12049_4324_ungetr.ngb-ss3 Bemerkung: Unter strömender Luft | | | |
|---|---|---|---|
| Projekt:  2176775 | Probe: Aquazol 5; CAS 25805-17-8, 154.6 mg | Probentr./TC: DTA/TG S / S | TG Korr/Messber: 800/35000 mg |
| Versuchs-ID: 120044324 ungetrocknet | Material: Polymer | Modus /Messtyp: DTA-TG / Probe | DSC Korr/Messber: 000/ |
| Datum/Zeit: 02.02.2012 11:41:14 | Korrektur-Datei: | Segmente: 1/1 | |
| Labor: Phasenanalyse | Tempkal./Empf. Datei: TCALZERO.TCX / SENSZERO.EXX | Tiegel: DTA/TG crucible Al2O3 | |
| Operator: | Bereich: 20/10.0(K/min)/1000 | Atmosphäre: O2 / -- / N2 | |

Erzeugt mit NETZSCH Proteus Software

EP 2 841 188 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0096306 A2
- US 3457339 A
- US 4392958 A
- US 4512892 A
- US 4906371 A
- DE 3803341 A1
- US 5846421 A
- EP 0571871 B1
- WO 2004009201 A2
- DE 4339810 C1
- WO 2005115595 A1
- US 6159369 A
- US 20110244215 A1
- US 5376274 A
- US 4618533 A
- US 4944879 A
- EP 1390087 B1
- EP 1381447 B1
- WO 2005077500 A1
- US 7067058 B2
- US 6039872 A
- DE 102009004848 B3
- JP 2011156533 A

**In der Beschreibung aufgeführte Nicht-Patentliteratur**

- **WALLHÄUSSER, K. H.** Praxis der Sterilisation, Desinfektion, Konservierung, Keimidentifizierung, Betriebshygiene. Georg Thieme Verlag, 1984
- *CHEMICAL ABSTRACTS,* 25805-17-8
- *CHEMICAL ABSTRACTS,* 9003-39-8, 25805-17-8, 25322-68-3, 25086-89-9